# EUROPÄISCHE PATENTSCHRIFT

(11) **EP 3 388 802 B1**
(45) Veröffentlichungstag und Bekanntmachung des Hinweises auf die Patenterteilung: **29.04.2020**
(21) Anmeldenummer: 18162780.3
(22) Anmeldetag: 20.03.2018
(51) Int. Cl.: G01K 1/02, G01K 7/20, F24C 7/08

(54) **SCHALTUNG UND VERFAHREN ZUR TEMPERATURMESSUNG UND TEMPERATURFÜHLER**
SWITCH AND METHOD FOR TEMPERATURE MEASUREMENT AND TEMPERATURE SENSOR
CIRCUIT ET PROCÉDÉ DE MESURE DE TEMPÉRATURE ET CAPTEUR DE TEMPÉRATURE

(30) Priorität: 13.04.2017 DE 102017206407
(43) Veröffentlichungstag der Anmeldung: 17.10.2018
(73) Patentinhaber: E.G.O. Elektro-Gerätebau GmbH, 75038 Oberderdingen (DE)
(72) Erfinder: Erbe, Sebastian, 75015 Bretten (DE); Gärtner, Norbert, 76275 Ettlingen (DE); Münzner, Frank, 56479 Willingen (DE); Schönemann, Konrad, 75056 Sulzfeld (DE); Thampi, Manu, 76227 Karlsruhe (DE)
(74) Vertreter: Patentanwälte Ruff, Wilhelm, Beier, Dauster & Partner mbB

(56) Entgegenhaltungen:
- DE-A1-102010 063 712
- US-A1- 2007 029 976
- US-A1- 2009 138 241

## Beschreibung

### ANWENDUNGSGEBIET UND STAND DER TECHNIK

Die Erfindung betrifft eine Schaltung zur Temperaturmessung, einen Temperaturfühler insbesondere für ein Gargerät, sowie ein Verfahren zur Temperaturmessung.

In DE102011079217A1 wird eine Schaltung zur Widerstandsmessung beschrieben, die insbesondere zur Messung von mehreren temperaturabhängigen Widerständen dient. Mit der Schaltung lassen sich drei temperaturabhängige Widerstandswerte über eine dreipolige Leitung auslesen. Es werden ein Mehrkerntemperaturfühler, ein Hausgerät sowie ein Verfahren zur Widerstandsbestimmung beschrieben. Nachteilig daran ist jedoch, dass diese auf drei Widerstände begrenzt ist und eine mindestens dreipolige Leitung zur Auswertung benötigt wird.

Auch aus der WO 93/16333 A1 gehen ein Mehrkerntemperaturfühler, ein Hausgerät sowie ein Verfahren zur Widerstandsbestimmung für eine Temperaturmessung hervor.

Aus der US 2009/138241 A1 ist ein Bus zum Verschalten analoger Sensoren bekannt, beispielsweise von drei temperaturabhängigen Widerständen als Temperatursensoren. Diese Temperatursensoren werden in Zweigen mit unterschiedlicher Verschaltung angeordnet, wobei eine gewisse Regelmäßigkeit im Aufbau vorhanden ist.

### AUFGABE UND LÖSUNG

Der Erfindung liegt die Aufgabe zugrunde, eine eingangs genannte Schaltung und ein Verfahren zur Temperaturmessung und insbesondere zur Bestimmung einer Kerntemperatur sowie einen Temperaturfühler zu schaffen, mit denen Probleme des Standes der Technik vermieden werden können und vorzugsweise eine Möglichkeit zur Messung von temperaturabhängigen Sensorwiderständen für eine Temperaturmessung geschaffen werden kann, die praxistauglich ist und mit der eine Temperaturmessung in einem Gargerät erfolgen kann. Insbesondere sollen eine Schaltung, ein Temperaturfühler und ein Verfahren geschaffen werden, mit denen eine Mehrzahl von temperaturabhängigen Sensorwiderständen einfach ausgewertet werden kann.

Gelöst wird diese Aufgabe durch eine Schaltung mit den Merkmalen des Anspruchs 1, durch einen Temperaturfühler mit den Merkmalen des Anspruchs 10 sowie durch ein Verfahren mit den Merkmalen des Anspruchs 12. Vorteilhafte sowie bevorzugte Ausgestaltungen der Erfindung sind Gegenstand der weiteren Ansprüche und werden im Folgenden näher erläutert. Dabei werden manche der nachfolgend genannten Merkmale nur für eine Schaltung, nur für einen Temperaturfühler oder nur für ein Verfahren beschrieben. Sie sollen jedoch unabhängig davon sowohl für eine Schaltung und für einen Temperaturfühler als auch für ein Verfahren unabhängig voneinander und selbständig gelten können. Der Wortlaut der Ansprüche wird durch ausdrückliche Bezugnahme zum Inhalt der Beschreibung gemacht.

Die erfindungsgemäße Schaltung weist mindestens zwei temperaturabhängige Sensorwiderstände auf, vorzugsweise mindestens drei. Die temperaturabhängigen Sensorwiderstände können vorteilhaft als NTC- oder PTC-Widerstand ausgebildet sein, insbesondere mit linearer Temperaturabhängigkeit. Jedem temperaturabhängigen Sensorwiderstand ist ein Halbleiterbauelement in Reihe vorgeschaltet. Vorteilhaft wird allgemein eine Diode bzw. im speziellen eine Zener-Diode oder eine Schottky-Diode verwendet, welche in Sperrrichtung geschaltet ist. Eine Zener-Diode hat eine charakteristische Durchlassspannung in der einen Richtung, analog zu den Dioden. In Sperrrichtung verfügt sie über eine Durchbruchs- bzw. Zenerspannung, deren Wert durch die Dotierung bei der Herstellung festgelegt wird. Eine Schottky-Diode verfügt technologiebedingt im Gegensatz zur klassische Diode über einer typische Durchlassspannung von 0,4 V, während diese bei der klassischen Diode bei typischen 0,6 V liegt. Wird diese Durchlassspannung überschritten wird die Diode in dieser Richtung leitfähig. Dies erfolgt bei einer Zener-Diode bei Anlegen eine Sperrspannung, welche größer ist als die Zenerspannung, und dann ist diese auch in Sperrrichtung leitend. Welche Art von Diode eingesetzt wird hängt von der Schaltung, der geforderten Genauigkeit der Temperaturmessung und von dem Temperaturbereich ab. Alternativ kann ein Transistor als Halbleiterbauelement verwendet werden, wobei dann noch eine entsprechende Ansteuerung benötigt wird.

Jeweils ein Halbleiterbauelement und ein temperaturabhängiger Sensorwiderstand bilden zusammen eine Einheitsanordnung erster Art. Wird eine Einheitsanordnung erster Art mit einem weiteren Halbleiterbauelement in Reihe geschaltet ergibt dies eine Einheitsanordnung zweiter Art. Jede Einheitsanordnung zweiter Art kann zu einer vorherigen Einheitsanordnung erster Art parallel geschaltet werden. Die zuerst vorgesehene Einheitsanordnung erster Art wird mit einem Messwiderstand in Reihe geschaltet. Dieser Messwiderstand hat einen deutlich geringeren Widerstand als die temperaturabhängigen Sensorwiderstände. Wenn der Messwiderstand mit Strom durchflossen wird fällt über ihm eine Spannung ab, die in Betrag und Polarität ausgewertet werden kann. An einem ersten Anschluss des Messwiderstands und dem gemeinsamen Anschluss der parallel geschalteten Einheitsanordnungen zweiter Art kann eine Versorgungsspannung U angelegt werden. Die Versorgungsspannung ist in Betrag und Polarität einstellbar bzw. durchstimmbar.

Wenn man eine Versorgungsspannung anlegt, welche größer ist als die Durchlassspannung einer ersten Diode als Halbleiterbauelement, aber kleiner als die zweifache Durchlassspannung, so wird die erste Diode leitfähig und es fließt ein Strom durch den ersten temperaturabhängigen Sensorwiderstand und durch den Messwiderstand. Über dem Messwiderstand fällt eine Spannung ab welche proportional zur Temperatur am ersten temperaturabhängigen Sensorwiderstand ist. Erhöht man die Versorgungsspannung auf einen Betrag größer als die zweifache Durchlassspannung, jedoch kleiner als die dreifache Durchlassspannung, fließt ein Strom durch den ersten temperaturabhängigen Sensorwiderstand und durch den zweiten temperaturabhängigen Sensorwiderstand. Die Summe dieser beiden Ströme fließt durch den Messwiderstand. Die Spannung, die über dem Messwiderstand abfällt, ist somit proportional zur Temperatur am ersten und am zweiten temperaturabhängigen Sensorwiderstand. Misst man zuerst den Strom durch den ersten temperaturabhängigen Sensorwiderstand und nach Änderung der Versorgungsspannung den Summenstrom, so kann man den Strom durch den zweiten temperaturabhängigen Sensorwiderstand berechnen, indem man den zuerst gemessenen Strom vom zweiten gemessenen Strom abzieht. In ähnlicher Form kann anstelle der vorgenannten Diode als Halbleiterbauelement auch ein Transistor verwendet werden mit Durchsteuerung ab einem bestimmten Wert der angelegten Versorgungsspannung.

Die erfindungsgemäße Schaltung lässt sich dabei um beinahe beliebig viele weitere solcher Einheitsanordnungen erster bzw. zweiter Art erweitern. Dabei gibt es aber immer nur eine einzige Einheitsanordnung erster Art. Somit lassen sich die Ströme und dadurch die Temperaturen an beinahe beliebig vielen Messpunkten über einen nur zweipoligen Spannungsabgriff ermitteln. Die Einheitsanordnungen und somit die Temperaturmesspunkte an den Sensorwiderständen lassen sich dabei über eine Änderung der Versorgungsspannung selektieren.

Eine weitere bevorzugte Ausführungsform der Erfindung weist einen Temperaturfühler auf. Der Temperaturfühler, bevorzugt ein Kerntemperaturfühler, kann zur Bestimmung der Innentemperatur bzw. der Kerntemperatur eines Garguts verwendet werden, vorzugsweise eines Lebensmittels als Gargut, wie Fleisch, Fisch odgl.. Der Temperaturfühler ist länglich bzw. er weist einen länglichen Stab auf, und es sind mehrere Temperaturmesspunkte daran vorgesehen. Die Temperaturmesspunkte weisen jeweils einen vorgenannten temperaturabhängigen Sensorwiderstand auf. Weiterhin weist der Temperaturfühler eine oben beschriebene Schaltung auf, vorteilhaft auch noch eine Steckverbindung für den elektrischen Anschluss, so dass er auch entfernt werden kann. Bevorzugt weist der Stab an einem Ende ein Griffstück auf, mit dem der Temperaturfühler gehalten werden kann. Das gegenüberliegende Ende ist verjüngt bzw. spitz gestaltet. Damit kann der Temperaturfühler leicht in das Gargut gestochen und positioniert werden. Durch die Mehrzahl an Temperaturmesspunkten können verschiedene Temperaturen an örtlich verschiedenen Bereichen innerhalb des Garguts gemessen werden. Dadurch kann eine Fehlpositionierung innerhalb des Garguts weitgehend vermieden werden. Vor allem kann dadurch erreicht werden, dass mindestens einer der Temperaturmesspunkte sehr nahe oder direkt im Kern des Garguts liegt, wo die Temperatur am geringsten ist und die Erfassung am wichtigsten ist. Hier sind ein bestimmter Gargrad bzw. ein Durchgaren am wichtigsten, da nach deren Feststellen der Garvorgang beendet werden kann.

Eine Steckverbindung ermöglicht den lösbaren Anschluss des Temperaturfühlers an ein Gargerät bspw. an einen Backofen, Dampfgarer odgl.. In einer weiteren bevorzugten Ausführungsform der Erfindung wird als Steckverbindung ein Klinkenstecker verwendet. Durch Verwendung der beschriebenen Schaltung können ein zweipoliger Klinkenstecker oder auch ein Monostecker zum Anschluss des Temperaturfühlers genügen.

Eine weitere vorteilhafte Ausführungsform der Erfindung sieht ein Verfahren zur Bestimmung oder Messung von Temperaturen bzw. Kerntemperaturen vor. Das Verfahren sieht die Verwendung einer eingangs beschriebenen Schaltung und/oder eines beschrieben Temperaturfühlers vor. Die Versorgungsspannung wird zur Selektion verschiedener Temperaturmesspunkte durchgestimmt. Zu jeder angelegten Versorgungsspannung wird die resultierende Spannung über dem Messwiderstand bestimmt. Die bestimmten Spannungswerte werden ausgewertet. Dies kann mit einer Recheneinheit erfolgen, vorteilhaft können dafür bspw. Controller, Einplatinenrechner, PCs odgl. verwendet werden.

Eine weitere vorteilhafte Ausführungsform der Erfindung weist ein Gargerät auf. Das Gargerät kann zum Zubereiten eines vorbeschriebenen Garguts verwendet werden, vorzugsweise eines Lebensmittels wie Fleisch, Fisch odgl.. Das Gargerät weist einen oben beschriebenen Temperaturfühler auf. Der Temperaturfühler wird über eine zweipolige Steckverbindung mit dem Gargerät verbunden. Das Gargerät weist weiterhin eine Steuereinrichtung auf, die die gemessenen Temperaturwerte empfangen kann. Die Steuereinrichtung kann auf Basis der empfangenen Temperaturwerte Entscheidungen treffen, welche den Garverlauf beeinflussen können, bzw. kann den Garverlauf steuern oder regeln, insbesondere in zeitlicher Hinsicht.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Weitere Vorteile und Aspekte der Erfindung ergeben sich aus den Ansprüchen und aus der folgenden Beschreibung von bevorzugten Ausführungsbeispielen der Erfindung, die nachfolgend anhand der Figuren erläutert sind. Dabei zeigen:
- Fig. 1: einen erfindungsgemäßen Kerntemperaturfühler,
- Fig. 2: einen Backofen mit dem erfindungsgemäßen Kerntemperaturfühler in einem Braten,
- Fig. 3 bis 7: verschiedene Schaltungen für erfindungsgemäße Schaltungen für einen Kerntemperaturfühler entsprechend Fig. 1 und
- Fig. 8: ein universelles Sensorinterface.

### DETAILLIERTE BESCHREIBUNG DER AUSFÜHRUNGSBEISPIELE

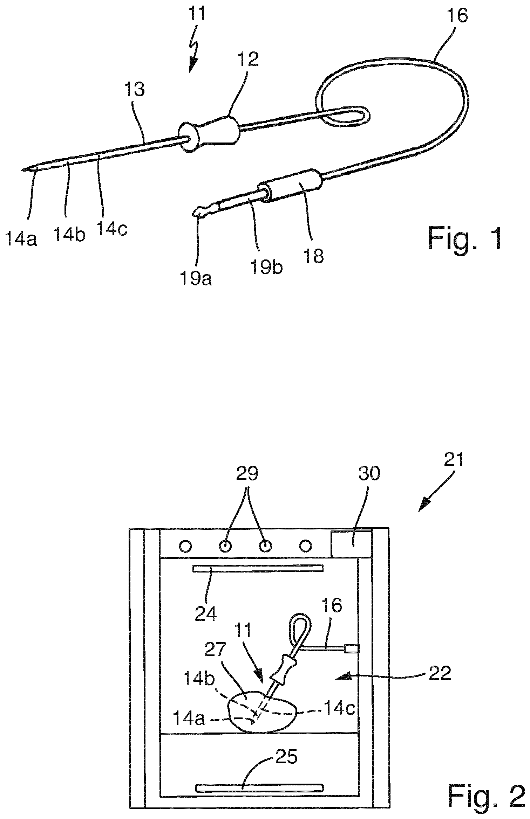

In der Fig. 1 ist ein erfindungsgemäßer Kerntemperaturfühler 11 als Temperaturfühler dargestellt, wie er ähnlich auch aus der eingangs genannten WO 93/16333 A1 bekannt ist. Der Kerntemperaturfühler 11 weist einen Griff 12 und einen länglichen, als Rohr ausgebildeten Stab 13 auf. An dem Stab 13 sind drei Temperaturmesspunkte 14a, 14b und 14c mit Abstand angeordnet. Es könnten auch noch mehr sein, beispielsweise vier bis sechs oder sogar acht Temperaturmesspunkte. Mittels eines Kabels 16 ist der Kerntemperaturfühler 11 mit einem Stecker 18 verbunden. Dieser Stecker 18 weist zwei Kontaktbereiche 19a und 19b auf zum elektrischen Anschluss des Kerntemperaturfühlers 11.

Dieser elektrische Anschluss erfolgt beispielsweise und vorteilhaft an einem Backofen 21 mit einer Backofenmuffel 22, die einen Oberhitze-Heizkörper 24 und einen Unterhitze-Heizkörper 25 aufweist. In der Backofenmuffel 22 befindet sich ein Braten 27, in den der Kerntemperaturfühler 11 eingesteckt ist. Die drei Temperaturmesspunkte 14a bis 14c kommen dabei an unterschiedlichen Stellen zu liegen bzw. befinden sich an unterschiedlichen Stellen im Braten 27. Aus der Darstellung der Fig. 2 ist zu ersehen, dass der Temperaturmesspunkt 14a wohl schon etwas zu tief ist, um die Temperatur im Kern bzw. im Zentrum des Bratens 27 zu erfassen. Der Temperaturmesspunkt 14c ist wohl etwas zu hoch, so dass von den drei dargestellten Temperaturmesspunkten der Temperaturmesspunkt 14b dem Kern des Bratens am nächsten liegt oder direkt in dem Kern des Bratens 27 ist. So kann der Temperaturmesspunkt 14b die Kerntemperatur des Bratens 27 am besten erfassen, was aber auch daran erkannt werden kann, dass es die niedrigste Temperatur ist, die an einem der der Temperaturmesspunkte 14 erfasst wird. Somit kann sich ein entsprechendes Garverfahren auf diese niedrigste Temperatur beziehen.

Der Backofen 21 weist noch verschiedene Bedienelemente 29 und eine Backofensteuerung 30 auf. In der Backofensteuerung 30 kann eine vorbeschriebene Schaltung realisiert sein, aber zumindest ein Sensorinterface, wie es nachfolgend noch näher erläutert wird. In der Backofensteuerung 30 des Backofens 21 können Daten und insbesondere die Kennwerte für die einzelnen Bauteile der Schaltung 32 abgespeichert sein, vorteilhaft in einem EEPROM. Dies kann beispielsweise als One-Wire-EEPROM ausgebildet sein, so dass es ebenfalls leicht angesteuert werden kann bzw. seine Daten ausgelesen werden können.

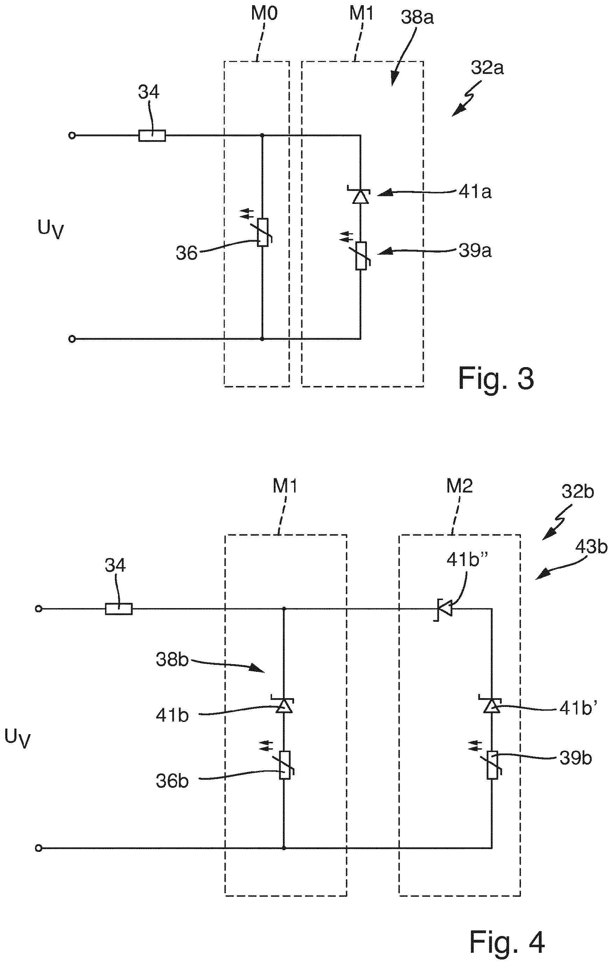

In der Fig. 3 ist eine einfache Schaltung 32a dargestellt, um mit einem Zweidraht-Sensor, also mit einer zweipoligen Schaltung, zwei Temperaturen erfassen zu können. Die Schaltung 32a weist einen Messwiderstand 34 und eine Versorgungsspannung U_{V} auf. Ein erster Sensorwiderstand 36 ist in Reihe zu dem Messwiderstand 34 geschaltet, wobei die Versorgungsspannung U_{V} über dieser Reihenschaltung anliegt. Der erste Sensorwiderstand 36 bildet dabei quasi eine Masche M0. Parallel dazu ist eine Masche M1 geschaltet, welche aus einer eingangs genannten Einheitsanordnung erster Art besteht bzw. eine solche bildet. Diese Einheitsanordnung erster Art 38a weist einen zweiten Sensorwiderstand 39a auf, der in Reihe zu einer Diode 41a geschaltet ist. Somit kann eine Temperatur am ersten Sensorwiderstand 36 und am zweiten Sensorwiderstand 39a erfasst werden und die Auswertung mit nur zwei Leitungen erfolgen. So kann beim zuvor beschriebenen Kerntemperaturfühler 11 das Kabel 16 einfach und dünn ausgebildet sein, ebenso der Stecker 18. Ist die angelegte Versorgungsspannung U_{V} kleiner als die Durchlassspannung der Diode 41a, so fließt über den Messwiderstand 34 nur der Strom, welcher über den ersten Sensorwiderstand 36 fließt. Somit kann anhand dieses Stroms und damit der über dem Messwiderstand 34 anfallenden Spannung der elektrische Widerstand des ersten Sensorwiderstands 36 bestimmt werden, und daraus wiederum die an ihm anliegende bzw. die vom ihm erfasste Temperatur. Sobald die Versorgungsspannung U_{V} größer als die Durchlassspannung der Diode 41a ist, fließt ein zusätzlicher Strom durch die Masche M1 und somit die Einheitsanordnung erster Art 38a. Der Summenstrom entspricht der Summe der Ströme durch die Masche M0 und die Masche M1. Da in einem Schritt zuvor der Strom durch die Masche M0 erfasst worden ist und daraus der Widerstand des ersten Sensorwiderstands 36berechnet worden ist, kann nun für die bekannte, an der Masche M1 anliegende Spannung der Strom durch den zweiten Sensorwiderstand 39a erfasst werden. Somit kann die Größe des elektrischen Widerstands des zweiten Sensorwiderstands 39a und damit auch die von ihm erfasste bzw. die an ihm anliegende Temperatur bestimmt werden. Dies kann in einer vorgenannten Backofensteuerung 30 erfolgen, alternativ in einer separaten Steuerung für den Kerntemperaturfühler 11.

Die Fig. 4 zeigt eine erfindungsgemäße Schaltung 32b mit einer Versorgungsspannung U_{V} und einem Messwiderstand 34. Eine Masche M1 wird von einer vorbeschriebenen Einheitsanordnung erster Art 38b gebildet. Eine parallel dazu geschaltete Masche M2 bildet eine Einheitsanordnung zweiter Art 43b. Diese besteht im Prinzip aus einer Einheitsanordnung erster Art entsprechend Fig. 3, nämlich aus einem zweiten Sensorwiderstand 39b und einer davor in Serie geschalteten Diode 41b'. In Reihe zu dieser Einheitsanordnung erster Art ist eine weitere Diode 41b" geschaltet innerhalb der Masche M2, wodurch eben eine Einheitsanordnung zweiter Art 43b gebildet ist. Diese ist eben parallel zur vorgenannten Einheitsanordnung erster Art 38b der Masche M1 geschaltet, ihre Parallelschaltung liegt in Reihe zum Messwiderstand 34 an der Versorgungsspannung U_{V} an. Die beiden Temperaturmessstellen an dem ersten Sensorwiderstand 36b und dem zweiten Sensorwiderstand 39b können wiederum mittels verschiedener Werte für die Versorgungsspannung U_{V} abgefragt werden. Ist die angelegte Versorgungsspannung U_{V} größer als die Durchlassspannung der Dioden 41, aber kleiner als das Doppelte dieser Durchlassspannung, so kann der über den Messwiderstand 34 fließende Strom berechnet werden als Differenz der Versorgungsspannung U_{V} und der Durchlassspannung der Dioden 41, wobei diese Differenz geteilt wird durch den Widerstandswert des ersten Sensorwiderstands 36b. Wird die Versorgungsspannung U_{V} größer als die doppelte Durchlassspannung der Dioden 41 eingestellt, so kann der über den Messwiderstand 34 fließende Strom berechnet werden als Summe von zwei Summanden. Der erste Summand bestimmt sich aus der Differenz der Versorgungsspannung U_{V} minus der Durchlassspannung der Dioden, wobei diese Differenz geteilt wird durch den Widerstandswert des ersten Sensorwiderstands 36. Der zweite Summand ist die Differenz von Versorgungsspannung U_{V} minus der zweifachen Durchlassspannung der Dioden 41, wobei diese Differenz durch den Widerstandswert des zweiten Sensorwiderstands 39b geteilt wird. Die Summe ergibt eben den für diese Versorgungsspannung U_{V} durch den Messwiderstand 34 fließenden Strom.

Da es sich bei der Schaltung 32a gemäß der Fig. 4 um ein unipolares Design handelt, könnten anstelle der Dioden 41 als Schottky-Dioden auch die eingangs genannten Zener-Dioden als Dioden bzw. erfindungsgemäße Halbleiter verwendet werden. Dies geht aber nicht für ein bipolares Design. Hierfür können Schottky-Dioden oder normale Dioden eingesetzt werden. Was für eine Art Diode eingesetzt wird hängt von der geforderten Genauigkeit für die Temperaturmessung und von dem vorgesehenen Temperaturbereich ab.

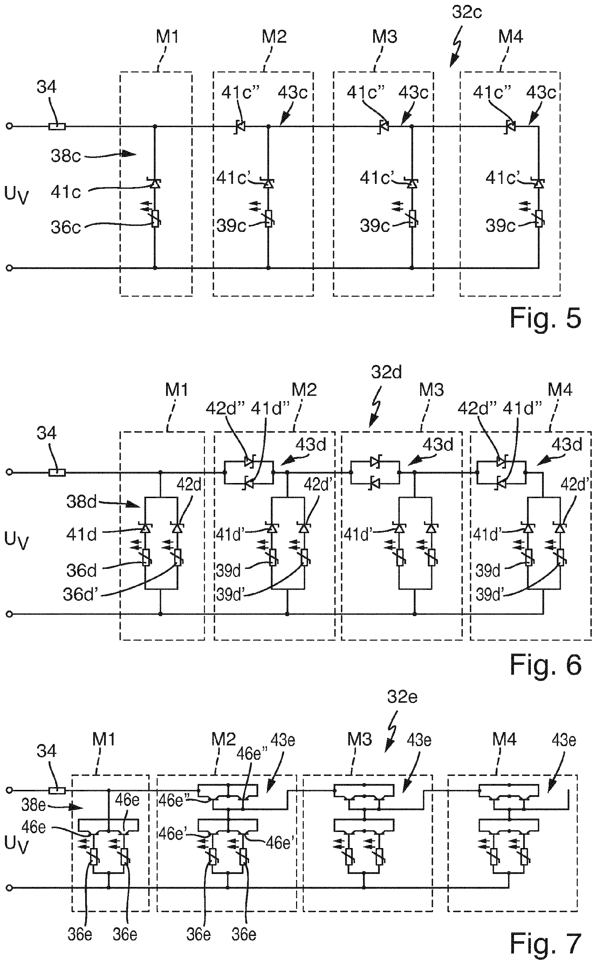

In der Fig. 5 ist dargestellt, wie an vier Temperaturmesspunkten eine Temperatur mit einer Zweidrahtleitung abgefragt werden kann. Im Prinzip sind bei der hier dargestellten Schaltung 32c zu der zuvor erläuterten Schaltung 32b aus Fig. 4 noch zwei weitere Maschen M3 und M4 mit jeweils gleichen Einheitsanordnungen zweiter Art parallel geschaltet, so dass insgesamt in der Masche M1 eine einzige Einheitsanordnung erster Art 38c vorgesehen ist, und in den Maschen M2, M3 und M4 drei Einheitsanordnungen zweiter Art 43c. Ähnlich wie zuvor beschrieben kann für die weiteren Sensorwiderstände der Maschen M3 und M4 die Temperatur bzw. der durch den Messwiderstand 34 fließende Strom berechnet werden, indem die Versorgungsspannung U_{V} zum einen zwischen der dreifachen und der vierfachen Durchlassspannung der Dioden 41 gewählt wird und zum anderen zwischen der vierfachen und der fünffachen Durchlassspannung. Dabei ergibt sich jeweils für jede Abstufung der Versorgungsspannung U_{V} die berechnete Temperatur an einem entsprechenden Sensorwiderstand. Diese ganze Anordnung in den einzelnen Maschen wäre dann in dem Stab 13 eines Kerntemperaturfühlers 11 entsprechend Fig. 1 angeordnet und mit dem zweiadrigen Kabel 16 an eine Steuerung angeschlossen.

Prinzipiell ist die Anzahl der zweiten Sensorwiderstände 39 in den Einheitsanordnungen zweiter Art 43 beliebig erweiterbar. Die Anzahl wird lediglich durch die maximale Größe der angelegten Versorgungsspannung U_{V}, der Genauigkeitsanforderung an den Kerntemperaturfühler 11 und die vom Betrag der Versorgungsspannung und Dimensionierung der Schaltung abhängigen Eigenerwärmungseffekte begrenzt. In der Praxis wird ein Kerntemperaturfühler mit drei oder eventuell auch vier Temperaturmesspunkten als ausreichend angesehen.

In der Schaltung 32d gemäß Fig. 6 ist eine Art bipolares Design dargestellt. Dabei werden jeweils die ersten und zweiten Sensorwiderstände 36d sowie 39d und 39d' der Einheitsanordnungen erster Art und zweiter Art in parallelen Zweigen geschaltet mit jeweils einer Diode 41d und 42d bzw. 41d' und 42d' davor, wobei diese Dioden 41d und 42d in den parallelen Zweigen einander entgegengerichtet sind. Zener-Dioden könnten hier nicht mehr verwendet werden. Dadurch werden die Sensorwiderstände 36d sowie 39d und 39d' sowohl mit dem negativen als auch mit dem positiver Teil der Versorgungsspannung U_{V} beaufschlagt. Der Vorteil dieser Lösung liegt in der höheren Auflösungsgenauigkeit gegenüber dem zuvor beschriebenen unipolaren Design. Auch die Dioden 41d" und 42d" vor dieser Parallelschaltung sind parallel und gegenpolig zueinander verschaltet. Ebenso ist in der Masche M1 eine Parallelschaltung für die Einheitsanordnung erster Art 38d vorhanden. Die gegenläufigen Paare von Dioden 41d und 42d bzw. 41d" und 42d" ersetzen die zuvor einfach geschalteten Dioden.

In der Fig. 7 ist eine nochmals weitere erfindungsgemäße Schaltung 32e dargestellt. Ausgehend von der Schaltung 32d aus Fig. 6 sind die Dioden 41d und 42d durch Transistoren 46e ersetzt als alternative Halbleiterbauelemente. Jedes nebeneinander angeordnete Paar von Transistoren 46e weist, ähnlich wie in Fig. 6 mit den Dioden 41 und 42, zueinander entgegengesetzte Transistoren 46e auf. Damit kann ab einer bestimmten Spannung auch jeweils pro Transistor 46e nur in einer Richtung Strom fließen. Ansonsten wird hierzu auf die Ausführungen zu Fig. 6 verwiesen.

Die grundsätzliche Erfindungsidee der Kaskadierung von Dioden bzw. allgemein Halbleiterbauelementen, insbesondere auch Transistoren gemäß Fig. 7, ermöglicht eben das Zwei-Leiter-Messprinzip, das den vorteilhaften und erfindungsgemäß gewünschten einfachen Anschluss eines Kerntemperaturfühlers möglich macht.

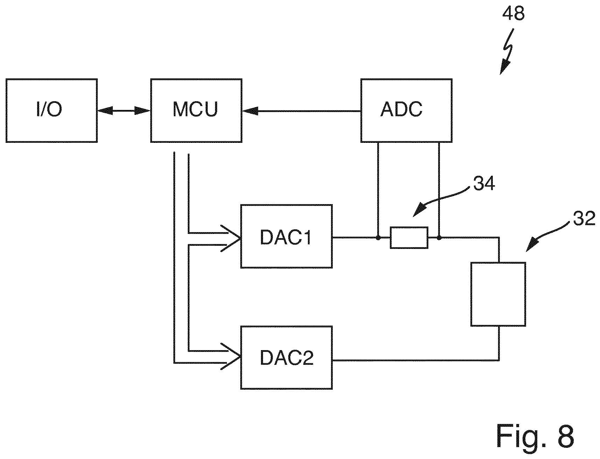

In der Fig. 8 ist ein universelles Sensorinterface 48 dargestellt. Mit diesem ist es möglich, sowohl konventionelle Kerntemperaturfühler, beispielsweise gemäß dem eingangs genannten Stand der Technik, als auch erfindungsgemäße Kerntemperaturfühler 11 mit Messwiderstand 34 und Schaltung 32 abzufragen. An einen Mikrocontroller MCU kann eine Bedieneinheit I/O angeschlossen sein, wie dies für andere derartige Kerntemperaturfühler aus dem Stand der Technik bekannt ist.

Über dem Messwiderstand 34 wird die Spannungsdifferenz mittels eines AD-Wandlers ADC bestimmt. Des Weiteren sind zwei DA-Wandler DAC1 und DAC2 vorgesehen. Diese Spannungsdifferenz ist vom Strom abhängig, der wiederum durch die Größe der Differenzspannung von DAC1 und DAC2 und den über den Sensor der Schaltung 32 fließenden Strom bestimmt wird. Bei einem Kerntemperaturfühler mit nur einem Temperatursensor bzw. nur einem Widerstand wird dieser nur von dem Wert des internen temperaturabhängigen Widerstands bestimmt. Bei Kerntemperaturfühlern entsprechend den Fig. 3 bis 7 wird die Anzahl der abgefragten Sensorwiderstände 36 und 39 in dem Kerntemperaturfühler durch die Größe und die Polarität der angelegten Spannung bestimmt. Die Anzahl der abgefragten Maschen M und die Summe der in diesen Maschen fließenden Ströme entsprechen dem Gesamtstrom der über die Schaltung 32 fließt. Dieser Strom kann indirekt über den Messwiderstand 34 erfasst werden. Sollen lediglich unipolar zu erfassende Schaltungen 32 bzw. Sensoren 36 und 39 abgefragt werden, wie sie in den Fig. 3 bis Fig. 5 dargestellt sind, so kann DAC2 auch durch einen Massenanschluss ersetzt werden. Eine Vereinfachung bei solchen bipolaren Temperatursensorschaltungen wäre es, dass der bereitgestellte Spannungswert vom DAC2 beispielsweise durch einen Spannungsteiler ersetzt wird, der eine für den Sensor geeignete Spannung bereitstellt, bei symmetrischer Spannungsverteilung der Sensoren beispielsweise U_{adc/2B}.

Eine weitere Vereinfachung wäre es, DAC1 mittels gewichteten Widerständen und gesteuerten Analog-Multiplexern zu ersetzen, was letztendlich aber der Realisierung von DAC in diskreter Bauweise entspricht. Eine spezielle Ausführung wäre beispielsweise die Realisierung mittels eines sogenannten digitalen Potentiometers bzw. Digipots.

## Patentansprüche

1. Schaltung (32a-e) zur Temperaturmessung mittels temperaturabhängiger Sensorwiderstände (36, 39a-e), wobei verschiedene temperaturabhängige Sensorwiderstände über eine Änderung einer Versorgungsspannung (U_{V}) selektierbar sind und die Messergebnisse über eine zweipolige Verbindung (16) übertragbar sind, **gekennzeichnet durch**:
- mindestens drei Einheitsanordnungen (M1) erster Art, welche jeweils ein Halbleiterbauelement (41a-d, 46e) und in Reihe dazu einen temperaturabhängigen Sensorwiderstand (39a-e) aufweisen,
- mindestens zwei Einheitsanordnungen (M2-M4) zweiter Art, welche jeweils gebildet sind von einer der Einheitsanordnungen (M1) erster Art und einem dazu in Reihe geschalteten Halbleiterbauelement (41c"-41d"; 42d"; 46e"),
wobei jede Einheitsanordnung (M2-M4) zweiter Art parallel zur vorherigen Einheitsanordnung (M1) erster Art geschaltet ist,
- einer Versorgungsspannung (U_{V}),
- einer zweipoligen Verbindung (16),
- einen Messwiderstand (34), welcher zu Einheitsanordnungen (M1) erster Art in Reihe geschaltet ist,
- eine Spannung, die über dem Messwiderstand (34) abfällt, wobei diese Spannung durch einen Summenstrom aus zwei Teilströmen über dem Messwiderstand abfällt, wobei jeder Teilstrom durch jeweils genau eine Einheitsanordnung (M1) erster Art oder eine Einheitsanordnung (M2-M4) zweiter Art fließt.

2. Schaltung nach Anspruch 1, **dadurch gekennzeichnet, dass** mindestens ein Sensorwiderstand (36, 39a-e) einen negativen Temperaturkoeffizienten aufweist.

3. Schaltung nach Anspruch 1 oder 2, **dadurch gekennzeichnet, dass** mindestens ein Sensorwiderstand (36, 39a-e) einen positiven Temperaturkoeffizienten aufweist.

4. Schaltung nach einem der vorhergehenden Ansprüche, **dadurch gekennzeichnet, dass** alle Halbleiterbauelemente (41c"-41d"; 42d"; 46e") gleich sind.

5. Schaltung nach einem der vorhergehenden Ansprüche, **dadurch gekennzeichnet, dass** das Halbleiterbauelement (41a-d, 41c"-41d"; 42d") ein Ventil ist.

6. Schaltung nach Anspruch 5, **dadurch gekennzeichnet, dass** das Halbleiterbauelement als Ventil eine Diode (41a-d, 41c"-41d"; 42d") ist, vorzugsweise eine Schottky-Diode.

7. Schaltung nach einem der Ansprüche 1 bis 4, **dadurch gekennzeichnet, dass** das Halbleiterbauelement (46e") ein Schalter ist.

8. Schaltung nach Anspruch 7, **dadurch gekennzeichnet, dass** das Halbleiterbauelement (46e") als Schalter ein Transistor ist.

9. Schaltung nach einem der vorhergehenden Ansprüche, **dadurch gekennzeichnet, dass**
- in jeder Einheitsanordnung (M1) erster Art parallel zu der Reihenschaltung aus Halbleiterbauelement (41d) und Sensorwiderstand (36d) eine zweite Reihenschaltung aus gleichem Halbleiterbauelement (42d) und gleichem Sensorwiderstand (36d') vorgesehen ist, wobei das Halbleiterbauelement in der zweiten Reihenschaltung entgegengesetzt angeordnet ist zu dem Halbleiterbauelement in der ersten Reihenschaltung,
- in jeder Einheitsanordnung (M2-4) zweiter Art parallel zu dem Halbleiterbauelement (41d") in Reihe mit der Einheitsanordnung erster Art ein zweites gleiches Halbleiterbauelement (42d") vorgesehen ist mit entgegengesetzter Anordnung.

10. Temperaturfühler (11) zur Bestimmung von Temperaturen an unterschiedlichen Temperaturmesspunkten mit,
- einem Stab (13), welcher mehrere Temperaturmesspunkte (14a-c) aufweist,
- einer elektrischer Schaltung (32a-e) nach einem der vorhergehenden Ansprüche, wobei an jedem Temperaturmesspunkt ein Sensorwiderstand (36, 39a-e) vorgesehen ist,
- einer Steckverbindung (18) für den Stab mit einer zweipoligen Verbindung (19a, b).

11. Temperaturfühler nach Anspruch 10, **dadurch gekennzeichnet, dass** die Temperaturmesspunkte (14a-c) und/oder Sensorwiderstände (36, 39a-e) gleichen Abstand zueinander aufweisen.

12. Verfahren zur Temperaturmessung mittels temperaturabhängiger Sensorwiderstände (36, 39a-e) mit einer Schaltung (32a-e) nach einem der Ansprüche 1 bis 9 oder mit einem Temperaturfühler (11) nach Anspruch 10 oder 11, mit den Schritten:
- Durchstimmen der Versorgungsspannung (U_{V}) zur Selektion verschiedener Temperaturmesspunkte (14a-c),
- Messen der Spannungen über dem Messwiderstand (34),
- Auswerten der gemessenen Spannungen und Bestimmung der resultierenden Temperaturen.

13. Verfahren nach Anspruch 12, **dadurch gekennzeichnet, dass** die Polarität der Versorgungsspannung (U_{V}) geändert wird.

## Claims

1. Circuitry (32a-e) for temperature measurement using temperature-dependent sensor resistors (36, 39a-e), wherein different temperature-dependent sensor resistors are selectable by a change in supply voltage (U_{V}) and the measurement results are transferable via a bipolar connection (16),
**characterized by**:
- at least three unit arrangements (M1) of a first type, each including a semiconductor device (41a-d, 46e) and in series thereto a temperature-dependent sensor resistor (39a-e),
- at least two unit arrangements (M2-M4) of a second type, each provided by one of the unit arrangements (M1) of the first type and a semiconductor device (41c"-41d"; 42d"; 46e") connected in series thereto, wherein each unit arrangement (M2-M4) of the second type is connected in parallel to the previous unit arrangement (M1) of the first type,
- a supply voltage (U_{V}),
- a bipolar connection (16),
- a measuring resistor (34) connected in series to unit arrangements (M1) of the first type,
- a voltage dropping across the measuring resistor (34), wherein said voltage drops by a sum current composed of two partial currents across the measuring resistor, wherein each partial current flows through exactly one unit arrangement (M1) of the first type or one unit arrangement (M2-M4) of the second type.

2. Circuitry according to claim 1, **characterized in that** at least one sensor resistor (36, 39a-e) has a negative temperature coefficient.

3. Circuitry according to claim 1 or 2, **characterized in that** at least one sensor resistor (36, 39a-e) has a positive temperature coefficient.

4. Circuitry according to any of the preceding claims, **characterized in that** all semiconductor devices (41c"-41d"; 42d"; 46e") are identical.

5. Circuitry according to any of the preceding claims, **characterized in that** the semiconductor device (41a-d, 41c"-41d"; 42d") is a valve.

6. Circuitry according to claim 5, **characterized in that** the semiconductor device as a valve is a diode (41a-d, 41c"-41d"; 42d"), preferably is a Schottky diode.

7. Circuitry according to any of the claims 1 to 4, **characterized in that** the semiconductor device (46e") is a switch.

8. Circuitry according to claim 7, **characterized in that** the semiconductor device (46e") as a switch is a transistor.

9. Circuitry according to any of the preceding claims, **characterized in that**
- in each unit arrangement (M1) of the first type, in parallel to the series connection made of semiconductor device (41d) and sensor resistor (36d), a second series connection made of the same semiconductor device (42d) and the same sensor resistor (36d') is provided, wherein the semiconductor device in the second series connection is arranged opposite to the semiconductor device in the first series connection,
- in each unit arrangement (M2-4) of the second type, in parallel to the semiconductor device (41d") in series with the unit arrangement of the first type, a second similar semiconductor device (42d") is provided in opposite arrangement.

10. Temperature sensor (11) for determining temperatures at different temperature measurement points, comprising
- a rod (13) including numerous temperature measurement points (14a-c),
- an electric circuitry (32a-e) according to any of the preceding claims, wherein a sensor resistor (36, 39a-e) is provided at each temperature measurement point,
- a plug-in connection (18) for the rod with a bipolar connection (19a, b).

11. Temperature sensor according to claim 10, **characterized in that** the temperature measurement points (14a-c) and/or sensor resistors (36, 39a-e) are uniformly spaced from each other.

12. Method for temperature measurement using temperature-dependent sensor resistors (36, 39a-e) having a circuitry (32a-e) according to any of the claims 1 to 9 or having a temperature sensor (11) according to claim 10 or 11, comprising the steps:
- tuning the supply voltage (U_{V}) for selecting different temperature measurement points (14a-c),
- measuring the voltages across the measuring resistor (34),
- evaluating the measured voltages and determining the resulting temperatures.

13. Method according to claim 12, **characterized in that** the polarity of the supply voltage (U_{V}) is changed.

## Revendications

1. Circuit (32a-e) de mesure de température au moyen d'une résistance de capteur (36, 39a-e) dépendant de la température, dans lequel des résistances de capteur dépendant de la température sont sélectionnables par une variation d'une tension d'alimentation (U_{V}) et des résultats de mesure sont transférables par un raccordement bipolaire (16),
**caractérisé par** :
- au moins trois arrangements unitaires (M1) d'un premier type, chacun présentant un dispositif semi-conducteur (41a-d, 46e) et en série une résistance de capteur (39a-e) dépendant de la température,
- au moins deux arrangements unitaires (M2-M4) d'un deuxième type, chacun composé de l'un des arrangements unitaires (M1) du premier type et un dispositif semi-conducteur (41c"-41d" ; 42d" ; 46e") connecté en série, dans lequel chaque arrangement unitaire (M2-M4) du deuxième type est connecté en parallèle à l'arrangement unitaire (M1) du premier type précédent,
- une tension d'alimentation (U_{V}),
- un raccordement bipolaire (16),
- une résistance de mesure (34) connectée en série à arrangements unitaires (M1) du premier type,
- une tension baissant sur la résistance de mesure (34), ladite tension baissant par un courant somme composé de deux courants partiels sur la résistance de mesure (34), chaque courant partiel circulant exactement à travers un arrangement unitaire (M1) du premier type ou un arrangement unitaire (M2-M4) du deuxième type.

2. Circuit selon la revendication 1, **caractérisé en ce qu'**au moins une résistance de capteur (36, 39a-e) présente un coefficient de température négatif.

3. Circuit selon la revendication 1 ou 2, **caractérisé en ce qu'**au moins une résistance de capteur (36, 39a-e) présente un coefficient de température positif.

4. Circuit selon l'une quelconque des revendications précédentes, **caractérisé en ce que** tous les dispositifs semi-conducteurs (41c"-41d" ; 42d" ; 46e") sont identiques.

5. Circuit selon l'une quelconque des revendications précédentes, **caractérisé en ce que** le dispositif semi-conducteur (41a-d, 41c"-41d" ; 42d") est une valve.

6. Circuit selon la revendication 5, **caractérisé en ce que** le dispositif semi-conducteur (41a-d, 41c"-41d" ; 42d") sous forme de valve est une diode, de préférence une diode Schottky.

7. Circuit selon l'une quelconque des revendications 1 à 4, **caractérisé en ce que** le dispositif semi-conducteur (46e") est un commutateur.

8. Circuit selon la revendication 7, **caractérisé en ce que** le dispositif semi-conducteur (46e") sous forme de commutateur est un transistor.

9. Circuit selon l'une quelconque des revendications précédentes, **caractérisé en ce que**
- dans chaque arrangement unitaire (M1) du premier type, en parallèle à la connexion en série composée du dispositif semi-conducteur (41d) et résistance de capteur (36d), une deuxième connexion en série composée du même dispositif semi-conducteur (42d) et même résistance de capteur (36d') est prévue, le dispositif semi-conducteur dans la deuxième connexion en série étant opposé au dispositif semi-conducteur de la première connexion en série,
- dans chaque arrangement unitaire (M2-4) du deuxième type, en parallèle au dispositif semi-conducteur (41d") en série avec l'arrangement unitaire du premier type, un deuxième dispositif semi-conducteur (42d") similaire est prévu en disposition opposée.

10. Capteur de température (11) pour la détermination de températures sur points de mesure de température différents, comprenant
- une tige (13) présentant plusieurs points de mesure de température (14a-c) différents,
- un circuit électrique (32a-e) selon l'une quelconque des revendications précédentes, dans lequel une résistance de capteur (36, 39a-e) est prévue sur chaque point de mesure de température,
- une fiche de raccordement (18) pour la tige avec un raccordement bipolaire (19a, b).

11. Capteur de température selon la revendication 10, **caractérisé en ce que** les points de mesure de température (14a-c) et/ou les résistances de capteur (36, 39a-e) sont espacés uniformément entre eux.

12. Procédé de mesure de température au moyen de résistances de capteur (36, 39a-e) dépendant de la température avec un circuit (32a-e) selon l'une quelconque des revendications 1 à 9 ou avec un capteur de température (11) selon la revendication 10 ou 11, comprenant les étapes :
- réglage de la tension d'alimentation (U_{V}) pour la sélection de points de mesure de température (14a-c) différents,
- mesurage de tensions sur la résistance de capteur (34),
- évaluation des tensions mesurées et détermination des températures résultantes.

13. Procédé selon la revendication 12, **caractérisé en ce que** la polarité de la tension d'alimentation (U_{V}) est modifiée.
